# EUROPEAN PATENT SPECIFICATION

(11) **EP 1 090 243 B1**
(45) Date of publication and mention of the grant of the patent: **14.08.2002**
(21) Application number: 99957192.0
(22) Date of filing: 23.06.1999
(51) Int. Cl.: F16L 11/08

(54) **A FLEXIBLE COMPOSITE PIPE AND A METHOD FOR MANUFACTURING SAME**
BIEGSAMES VERBUNDWERKSTOFFROHR UND VERFAHREN ZU SEINER HERSTELLUNG
TUYAU COMPOSITE FLEXIBLE ET PROCEDE DE FABRICATION CORRESPONDANT

(30) Priority: 24.06.1998 NO 982945
(43) Date of publication of application: 11.04.2001
(73) Proprietor: ABB Offshore Systems AS, 1375 Billingstad (NO)
(72) Inventor: BREVIK, Arnt, Frode, N-1346 Gjettum (NO); GRYTA, Ole, Anton, N-1370 Asker (NO)
(74) Representative: Howe, Steven
(86) International application number: NO9900215
(87) International publication number: WO9967561

(56) References cited:
- EP-A1- 0 062 436
- EP-A1- 0 148 099
- EP-A2- 0 417 908
- WO-A2-92/16355
- DE-C2- 3 942 354
- GB-A- 2 165 331
- GB-A- 2 209 284
- US-A- 3 905 398
- US-A- 5 660 210

## Description

The present invention relates to a flexible composite tube as disclosed in the preamble of claim 1, intended to be used for the transport of fluids and in particular hydrocarbons (e.g. oil and/or gas), injection fluids (e.g. methanol, water etc.). The pipe may also be used as a flexible riser, adapted for transportation of fluids from/to a floating production unit to/from a sub sea wellhead etc.

The flexible composite line according to the present invention is a high performance device developed to serve the above purposes at high temperatures (up to 200 °C), high pressures (up to 700 bars), and for deep water dynamic applications (such as flexible risers).

Flexible pipelines or risers are previously known in connection with dynamic riser systems. In these prior art systems the tension elements are made of steel. Accordingly the weight of a conventional tube is very high, also when submerged. The top tension is extremely high at large water depths, and accordingly prior art riser tubes of flexible type have only been used in rather shallow water. Conventional flexible risers also have a limited temperature range, typical up to 130°C, have a limited pressure resistance, and the manufacturing costs are very high, due to a complicated fabrication process.

Previously known metallic, dynamic tubes and risers are not very flexible and therefore not spoolable, which leads to an expensive and complex installation; such prior art flexible risers cannot take large deformation during operation, they accept only limited temperature intervals, e.g. Titanium is only qualified up to 110°C, the hang-off forces become very large due to the large weight even in submerged position, and if corrosion resistive metal is used (which is often required) very high material costs are the result. In deep-sea locations flexible solutions have not at all been viable.

The object of the present invention is to provide a new, lightweight, high performance flexible pipe applicable for transportation of fluids, such as hydrocarbons (oil and/or gas), and injection mediums such as methanol and water:

The main advantages of the flexible composite line are;
It is spoolable( Elongation during installation approx.3-4%).
It is a lightweight pipe and accordingly the required top tension is low.
The design lifetime is set to 20 years.
It can take large deflections also during the operational phase.

The following features make the flexible, composite riser unique:
- The build up of the composite materials in different bonded layers.
- The fabrication process by use of extrusion and welding or gluing of tapes.
- The combinations of materials that make the matrix fulfill the requirements to temperature, sealing(diffusion), electrical insulation, pressure, weight and elongation requirements.

The riser concept is based on the following design:

A bonded pipe construction based on an inner liner, at least two reinforcing layers, and an outer liner; as described in more detail in the claims.

Still other advantages are:
- The tensioning elements may be jointed, either by overlapping and gluing for thermosetting materials or by overlapping and welding for thermoplastic materials.
- The matrix material may be blended and accordingly it may be changed from the inner layers of the tube to the outer layers; so that each layer is compatible to its adjacent layers.
- The change of the matrix material mentioned above may also be implemented so that each layer is made from a material being as inexpensive as the requirements to each layer allow.
- Optimal material qualities may be obtained for each layer, as each layer may be designed to endure the local conditions, e.g. when temperature and pressure are considered.

The tube according to the present invention is disclosed in claim 1.

The different layers have different tasks and can be combined in a huge number of combinations. Thickness, orientations, multiple layers, intermediate layers, matrix materials and fibre materials are all parameters which may be manipulated.

The concept is based on a tube, such as a riser, which can be spooled onto a reel. Two basic production concepts can be used. The first is to produce the whole riser in one piece and second is to produce discrete lengths and assemble those.

A more detailed description of a tube according to this invention is stated below, including some possible modifications and preferred solutions.

A flexible polymer composite riser may be designed with an inner diameter ranging from 150 to 305 mm (6 to 12 inches), for transportation of fluids such as hydrocarbons (oil and gas), methanol, water and other gases and liquids. The riser is flexible enough to be spooled onto a reel with a hub radius of 4500-8500 mm. An 203 mm (8 inch) riser will typically be spooled on a reel with a hub radius of 5500 mm.

The riser consists of three main construction elements; an inner liner of thermoplastic material bonded to a reinforced polymer element (composite) and an outer liner of thermoplastic material, which is bonded to the reinforcing polymer element.

The functions and description of the different layers are as follows:

The inner liner acts as a barrier against the pressurised oil/gas flow. It protects the reinforced layers from exposure of wear, abrasion, chemicals, heat etc. The liner must cope with temperature in the range of 100-200°C. Liner materials include, but are not limited to the following: Polyamides (PA), Polyvinylidene fluoride (PVDF), Fluoro-ethylene-propylene (FEP) and other fluoro polymers, and Polyether ether ketone (PEEK). Typical thickness is 6-12 mm.

The reinforcing layers shall cope with all the mechanical and thermal loads, to which the riser is exposed. The reinforcing layers are made of polymer matrix composites, which are glued or welded, to the inner liner. Thermoplastic matrix composites are welded to the inner liner by means of laser or other heating devices. Thermosetting matrix composites are glued to the inner liner with epoxy or other types of glue.

The reinforcing layers are built up of many single laminates consisting of unidirectional continuous fibres of carbon, glass, or aramid, which are embedded in thermoplastic or thermosetting resins. Typical thermoplastic resins are the following: Polyamides (PA, PPA) Polysulphone (PSU), Polyether imide (PEI) and polyether sulphone (PES). A typical thermosetting resin is epoxy.

When thermoplastic resins are used, each single laminate is welded to the other layers by means of laser or other heating devices. When thermosetting resins are used, each single laminate is glued to the other layers by means of the resin itself.

The reinforcing layers can be oriented in angles between ±35 and ±70° to the length direction of the riser. Typically the inner reinforcing layer is directed at ±60° and the outer is directed +45° Typical thickness is 20-40 mm.

The outer liner protects the reinforced layers from outer exposure of wear, abrasion, chemicals, heat etc. Outer liner materials include the following: Polyethylene (PE), Polyamides (PA), and basically the same materials as the matrix in the reinforcing outer layer. Typical thickness is 4-8 mm.

All the solutions mentioned below are included in the present invention:

A riser with a thermoplastic matrix composite as the reinforcing polymer element. The fibre reinforced thermoplastic matrix make it possible to have a thermoplastic welded bond to both the inner and the outer liner. The reinforcing polymer element is built up of several unidirectional layers welded to each other. The layers consist of a thermoplastic matrix, typical PPA, PSU, PEI or PES, which is reinforced with unidirectional aramid fibres. The fibre directions are typical ±52° on the riser length direction.

A riser where the reinforcing polymer element is built up of single layers of different fibre reinforced thermoplastic matrices. The matrices change gradually or in steps from inner layer to outer layer. Typical (from inside) is 50% of total thickness with PSU and 50% with PA or PPA. The reinforcement can be one type (carbon, glass, or aramid) through the thickness or change together with the change in matrix. In this way the properties of the resins (and/or fibres) are adapted to the requirements (temperature resistance, mechanical loads etc.) through the tube wall.

Thus the invention relates to a riser where the reinforcing polymer element is built up of layers of one basic reinforced thermoplastic matrix, which is blended gradually or in steps from an inner layer to an outer layer with one or several other polymers. A typical resin is PES, which is blended with typical PSU.

A riser with a blended matrix as stated above but with inner liner made in the basic polymer and the outer liner built with the blended basic polymer.

A riser having different fibre reinforced thermoplastic matrices but with intermediate layers of a thermoplastic polymer. The purpose of those layers is to work as crack stoppers, and to insulate the other layers.

The invention also relates to a riser as described above, but with a thermosetting matrix composite as the reinforcing polymer element. The reinforcing polymer element is built up of several layers glued to each other. The layers consist of a thermosetting matrix of epoxy, reinforced with glass fibres, aramid fibres, carbon fibres or other types of fibres.

The invention also relates to a riser as described above, but with two typical fibre orientations. The inner reinforcement layers, typical 70% of the thickness, are directed at ±60°, and the outer reinforcement layers (30%) are directed at ±45° related to the tube axes. The inner reinforcement layers are typical carbon fibres and the outer layers typical glass fibres.

To get a still better understanding of the present invention it is referred to preferred embodiments described in the specification below with reference to the accompanying drawings, where:
- Fig. 1: shows an example of the design of a flexible riser. Only the end of the tube is shown where each layer is partly stripped off to show the layers below in an illustrating manner,
- Fig. 2: shows a different embodiment of a flexible riser according to the present invention, in which at least some of the tensioning elements are separated by an intermediate layer not including any tensioning elements, enhancing the bending properties of the tube,
- Fig. 3: illustrates in perspective how one of the tensioning layers (sector III of layer 5 as an example) of the tube in Fig. 2, may be built up, and
- Fig. 4: illustrates how a riser tube according to the present invention may be manufactured.

Note that the same reference numbers are used for the same parts on all the figures where appropriate, that the different figures or even details on one single figure not necessarily are represented in the same scale, and that some practical details of the design and implementation may be omitted to avoid crowded drawings. Thus, the embodiments shown in the drawings only represent examples of the invention which may be modified in many manners.

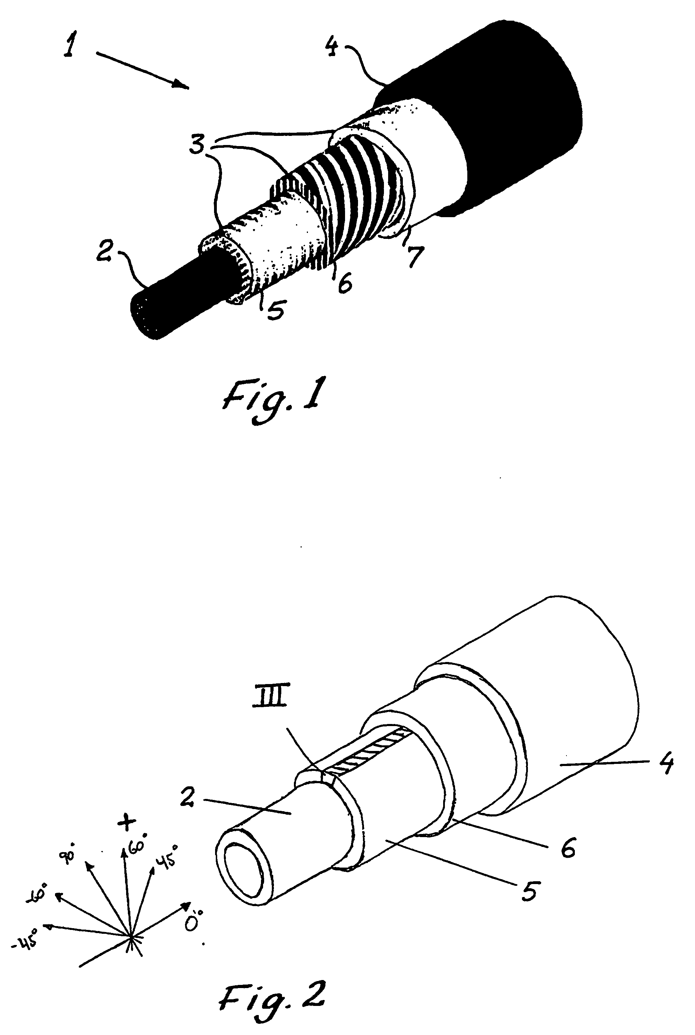

In Fig. 1 an end portion of a long riser tube is shown, in which each layer is partly stripped off to show the design of the layers within.

Accordingly the riser tube 1 is built up from the following layers ranging from within: An inner, hollow liner 2, different tensioning layers 3 which are fibre reinforced and comprise three sub layers 5,6,7 and an outer, protective liner 4.

The inner liner 2 acts as a barrier against the pressurized oil/gas flow. The inner liner also protects the adjacent reinforced sub layer 5 from exposure of wear, abrasion, chemicals, heat etc. The liner 2 must cope with temperatures between 100-200°C. The inner liner material may be selected from the following group of materials: Polyamides (PA), polyvinylidenfluorid (PVDF), fluoro-ethylenpropylene (FEP) and other fluoro-polymers, and/or polyether-etherketon (PEEK). Typical thickness of the inner liner is 6-12 mm.

The internal diameter of the inner liner may range from 150-305 mm (6-12 inches) and the completed riser tube 1 is flexible enough to be spooled onto a reel with a hub radius of 4500-8500 mm. A 203 mm (8 inch) riser will typically be spooled on a reel with a hub radius of 5500 mm.

The reinforcing layers 3 shall accept all the mechanical and thermal loads to which the riser is exposed. The reinforcing layers 3 including sub layers 5,6,7, are made of polymer matrix composites that are glued or welded to the inner liner or to each other. When thermoplastic composites are considered, they are welded by means of a laser or another heating device. When thermosetting matrix composites are considered, they are glued with epoxy or other types of glue.

The reinforcing layers are built up from at least two separate laminates comprising unidirectional, continuous or jointed fibres of carbon, glass and/or aramid, embedded in a thermoplastic or thermosetting resin. Typical thermoplastic resins are the following: Polyamide (PA, PPA), polysulphone (PSU), polyetherimid (PEI) and polyether sulphone (PES). A typical thermosetting resin is epoxy.

When thermoplastic resins are used, each single laminate is welded to the next layer by means of a laser or another heating device. When thermosetting resins are used, each single laminate is glued to the next layer by means of the resin itself.

The reinforcing layers preferably can be oriented in angles between ±35 and ±70° related to the length direction of the riser. Typically the inner reinforcing layers are directed at ±60° and the outer are directed alternatingly at ±45°, also related to the tube axes. Typical thickness of these layers is 20-40 mm.

The outer liner 4 protects the reinforced layers from external exposure from wear, abrasion, chemicals, heat etc. The outer liner materials are selected from the following group of materials: Polyethylene (PE), polyamides (PA), and basically the same materials as the matrix in the reinforcing outer layer. Typical thickness is 4-8 mm.

It should already be mentioned that each layer of the tube is designed to be just sturdy enough to tolerate the stress it is exposed to at its own position within the tube. Thus, the inner liner has qualities which stand up to the strain and stress to which that specific layer is exposed. Accordingly the inner liner must endure high temperatures, some reinforcing layers must endure high internal pressures, some other of the reinforcing layers have to stand up with a high stress in longitudinal direction, the different reinforcing layers also cooperate to avoid torsional curving and twisting of the pipeline when large changes occur, e.g. in the longitudinal strain. Finally the outer liner 4 has to be designed to tolerate the conditions in the surroundings, e.g. the temperatures, the composition and fouling taking place in the sea.

It should also be mentioned that the matrix material either may be changed gradually or stepwise from the inner layers to the outer layers, however, always so that each layer is compatible to the adjacent layers on both sides. It should also be pointed out that such changing or blending of the materials may be done according to economic considerations, i.e. each layer may be built up from the less expensive material acceptable for the prevailing conditions just at this position within the tube.

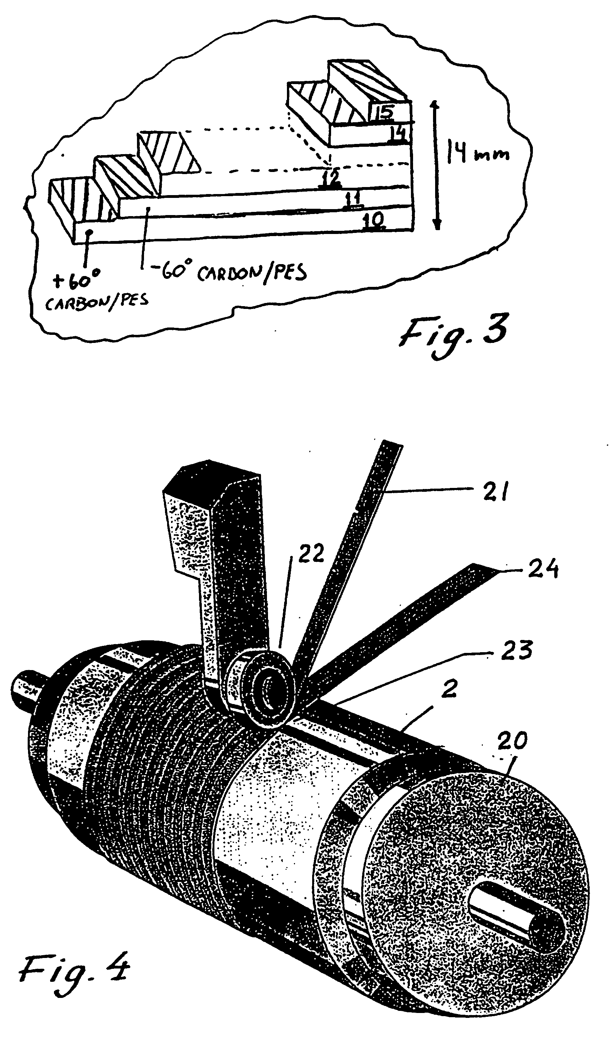

Fig. 2 shows a similar view of the end of a flexible tube according to the present invention, as that in Fig. 1. In the embodiment according to Fig. 2 the inner liner 2 is made of a 6 mm thick PEEK sheath, the next reinforcing layer 5 comprises a plurality of laminated sub-layers having a crosswire orientation of the fibres, as the lay direction is altered for each sub layer. This is more clearly shown in Fig. 3. This first reinforced layer 5 has a total thickness of 14 mm, the reinforcing fibres are carbon fibres integrated in a PES matrix material and the layers have approximately a pitch angle alternating between +60° and -60°.

The next layer 6 may in a similar manner comprise a plurality of fibre reinforced sub layers. The complete thickness of the layer 6 is, e.g. 6 mm and here the reinforcing fibres are glass fibres having an alternating pitch between +45° and -45°, while the matrix material is PSU.

Finally the outer liner may be a 4 mm thick mantel made of homogenous PA.

A typical riser according to the invention is shown in Fig. 2 depicting a flexible 203 mm (8 inches) inner diameter riser. This riser can be spooled on a reel with radius 5500 mm. The riser is continuous without joints. The riser is designed for an inner pressure of 700 bars. It is built up of an inner liner made of PEEK (Polyether ether ketone), which is a high temperature and chemically resistant partly crystalline thermoplastic material. The thickness of the inner liner is 6 mm. A carbon fibre reinforced PSU (Polysulphone) composite, which is built up of several layers (typical 14 layers) of unidirectional tape or roving, is winded on the inner liner. The layers are winded ±60° (first layer +60°, next -60° etc.) to the length of the riser. This reinforcing element is 14 mm thick. The outer reinforcing element 6 consists of one or more layers of glass fibre reinforced PES (polyether-sulphone). This element is 6 mm thick. The reinforcing layers in this element, is winded ±45° to the length of the riser. The outer liner is 4 mm thick and is made of PA (polyamide).

Each unidirectional layer is welded to each other with laser or other heating devices. See Fig. 3.

Details within each of the fibre reinforced layers 5 and 6 are shown more clearly in Fig. 3. Fig. 3 may relate to the reinforcing layer 5 and/or to the reinforcing layers 6,7 which all are built up in a similar way, as they may comprise a plurality of sub-layers shown in Fig. 3 with reference numbers 10-15. In the layer 5 the total thickness is, e.g. 14 mm and the reinforcing fibres are carbon fibres embedded in a matrix material of PES. The pitch angle of the fibres may alternate from one sub layer to the next, as, e.g. from +60° in layer 10 to -60° in layer 11, both relative to the longitudinal axis of the tube. It should also be mentioned that a modification could be introduced, as some of the sub layers could be without any reinforcing fibres. This is done to obtain a more flexible tube, as sub layers without fibres will allow some sliding between adjacent fibre reinforced layers. To allow such a shear-force displacement of two adjacent fibre reinforced layers during bending, a thermoplastic layer without any fibre reinforcement may be introduced. Still, another possibility is to let the outermost sub layers on one or both sides of the layer 5 be without fibre reinforcements.

Finally it should be mentioned that the matrix material, where PES is mentioned as an example, may be gradually blended with another matrix material, such as PSU, so that the content of PES in the matrix material has a higher value in sub layer 10 than in sub layer 15, while the contents of PSU may be much higher in the sub layer 15 than in the sub-layer 11. With such a blended solution it is preferred that the outer layers, 10 and 15 in the shown example, are unblended, e.g. consisting completely of PES respectively PSU.

The same explanation as given above for layer 5 may be used also for the next layer 6. However, here it is preferred that the reinforcing fibres are glass fibres, that the pitch angle changes from +45° in one layer to -45° in the next, that PSU is the main or basic matrix material and that the complete thickness of the layer 6 is approximately 6 mm.

Finally the outer liner 4 is shown as a 4 mm thick layer of PA. Here also the material may be blended so that the external surface comprises only PA or has a substantial content of PA while the inner surface of the outer liner 4 may comprise a higher content of PSU, or possibly PSU only, to make the outer liner more compatible with the external surface of the reinforced layer 7.

It should also be mentioned that at least one of the layers or sub layers may have a fibre reinforcement with a pitch angle of 90° or close to 90° to take up an internal overpressure.

In Fig. 4 it is in principle shown how a tube according to the above description may be produced. The inner liner is built up around a mandrel 20 in a production line, the matrix material may be extruded from nozzles (not shown on the figure), while the reinforcing fibres 21 may be applied as fibre tapes by means of a roller 22 having the desired pitch angle. Heating may be applied as desired in a heating zone 23, e.g. by mean of a laser beam 24.

It should also be mentioned that such a pipe may be produced in very long lengths, e.g. more than 2 km. When such long tubes are produced, the reinforcing fibres may be jointed, e.g. by overlapping the fibre tapes and jointing them with a glue when thermosetting materials are considered and by welding when thermoplastic materials are considered. However, such tubes may also be produced in shorter sections which may be jointed at the site with stiff jointing members preferably of a type which can transfer the stress and strain in longitudinal direction to the next length of the tube.

The different layers have different tasks and can be combined in a huge number of combinations. Thickness, orientation, multiple layers, intermediate layers, matrix materials and fibre materials are all parameters which may be manipulated.

The concept is based on a riser, which can be spooled onto a reel. Two basic production concepts can be used. The first is to produce the whole riser in one piece and second is to produce discrete lengths and assemble those.

The flexible riser tube may be modified in many ways without leaving the scope of the invention. Thus, the numbers of different layers may vary. The material used in the fibres may change from one layer to the next, but also along the tube length. There may be included reinforced layers with a much higher pitch angle, close to 90°, which layer or layers may be designed to take up most of the internal over-pressure. The pitch of the fibres or some of the fibres may also be below 45°, quite down to 0°, i.e. parallel to the tube axes.

The layers without any reinforcing fibres may comprise one complete sub layer, such as 5,6 or 7, or they may comprise one or some selected of the sub-layers such as 10-15, within one layer.

The change of the matrix material may take place abruptly or gradually, provided that the adjacent layers are compatible to each other, so that strong bonding may be obtained. Thus, one thermoplastic layer may be arranged between two thermosetting layers or vice versa.

The complete tube may be protected by outer conventional protective sheathing (not shown) and may be delivered as one continuos tube or as sections adapted to be jointed, then possibly with tensioning joints.

## Claims

1. A flexible, polymer, composite tube such as a flexible riser (1) adapted for transport of fluids such as hydrocarbons, e.g. oil and/or gas, which flexible riser (1) comprises the following structural elements:
- an inner liner (2) of thermoplastic material,
- an intermediate reinforced, polymer, multilayer component (3), and
- an outer thermoplastic liner (4);
where the inner liner (2) is continuously bonded to the intermediate, multilayer component (3), which again is continuously bonded to the outer liner (4),
that the reinforced, polymer component (3) comprises at least two, distinct elements (5,6,7),
- one first, reinforced polymer element (5) comprising a fibre reinforced polymer, and
- one second, reinforced polymer element (6) also comprising a fibre reinforced element;
**characterized in that**
- at least one of the following parameters
- the fibre material,
- the polymer material,
- the design details, such as dimensions and length of lay for the fibres,
differ significantly between said at least two elements (5,6,7) ,
- and that all layers are bonded to their adjacent layer(s) by means of the matrix material in the layer itself;
to ensure that the riser tube (1) is flexible enough to be coiled with a curvature radius as short as approximately 20 times its outer diameter.

2. A flexible, polymer, composite tube as stated in claim 1,
**characterized in that** there internally in at least one of the reinforced elements (5,6,7) and/or inbetween said at least two elements (5,6,7) is/are arranged at least one layer containing polymer material only; so that an internal shear force during bending may result in a minor elastic, longitudinal deformation within the polymer material leading to a small mutual displacement between adjacent fibre reinforced layers.

3. A flexible tube as stated in claim 1 or 2,
**characterized in that** the inner liner (2) is made of at least one polymeric material being sufficiently resistant against wear, abrasion, chemicals and heat to be exposed to the hydrocarbons which are to be transported at the prevailing pressure and temperature, and having the ability to be securely bonded to the inner, reinforced component (5).

4. A flexible tube as claimed in any of the claims 1-3,
**characterized in that** the outer liner (4) includes at least one polymer material adapted to protect the adjacent reinforced layers from exposure of wear, abrasion, chemicals and heat; preferably consisting of polyethylene, polyamide and substantially comprising a material compatible to the matrix material of the outermost reinforcing element (6,7).

5. A flexible tube as stated in any of the claims 1-4,
**characterized in that** at least one of the intermediate elements (5,6,7) has a matrix material changing gradually or stepwise from one polymer material to another polymer material.

6. A flexible tube as stated in any of the claims 1-5,
**characterized in that** the reinforced elements (5,6,7) have different reinforcement fibres, each time compatible to the surrounding matrix material.

7. A flexible tube as claimed in claim 5 or 6,
**characterized in that** the matrix material in the reinforced components (5,6,7) gradually or in steps changes from PSU close to the inner liner (2) to PA or PPA close to the outer liner (4).

8. A flexible tube as claimed in any of the claims 1-7,
**characterized in that** the inner liner (2) is made of one first basic polymer and the outer liner (4) is built of the first basic polymer blended with one or several other polymers.

9. A flexible tube as claimed in any of the claims 1-8, where the tube (1) is continuous without any joints, and is designed for a high internal and external pressure,
**characterized in that**
- the inner liner (2) is made of polyether ether ketone (PEEK),
- the inner fibre reinforced element (5) includes a carbon fibre reinforced polysulphone composite, comprising:
- many layers of unidirectional tape or roving winded on the inner liner (2), where the lay of the applied fibres alternates between +60° and -60° (typical 14 alternating layers),
- the outer reinforcing element (6) comprises glass fibre reinforced polyether sulphone (PES), where the glass fibre reinforcement is winded alternately with +45° and -45° while
- the outer liner (4) is made of polyamide (PA).

## Patentansprüche

1. Flexibles, polymeres Verbundrohr, wie beispielsweise ein flexibles Steigrohr (1), das für den Transport von Fluiden, wie beispielsweise Kohlenwasserstoffen, beispielsweise Öl und/oder Gas, ausgebildet ist, wobei das flexible Steigrohr (1) die folgenden Bauelemente aufweist:
- ein inneres Futterrohr (2) aus thermoplastischem Material,
- eine mittlere, verstärkte, polymere Mehrschichtkomponente (3), und
- ein thermoplastisches Außenrohr (4);
wobei das innere Futterrohr (2) fortlaufend mit der mittleren Mehrschichtkomponente (3) verbunden ist, die wiederum fortlaufend mit dem Außenrohr (4) verbunden ist,
wobei die verstärkte Polymerkomponente (3) wenigstens zwei unterschiedliche Elemente (5, 6, 7) aufweist,
- ein erstes, verstärktes Polymerelement (5), das ein fiberverstärktes Polymer aufweist, und
- ein zweites verstärktes Polymerelement (6), das ebenfalls ein fiberverstärktes Element aufweist;
**dadurch gekennzeichnet, daß**
- wenigstens einer der folgenden Parameter
- das Fibermaterial
- das Polymermaterial
- die Gestaltungseinzelheiten, wie beispielsweise Abmessungen und Lege länge der Fibern,
sich signifikant zwischen den wenigstens zwei Elementen (5, 6, 7) unterscheiden,
- und daß alle Schichten mit ihrer benachbarten oder den benachbarten Schichten mittels des Matrixmaterials in der Schicht selbst, verbunden sind;
um sicherzustellen, daß das Steigrohr (1) flexibel genug ist, um mit einem Krümmungsradius von ungefähr dem 20-fachen seines Außendurchmessers gewendelt zu werden.

2. Flexibles, polymeres Verbundrohr nach Anspruch 1,
**dadurch gekennzeichnet, daß** im Inneren wenigstens eines der verstärkten Elemente (5, 6, 7) und/oder zwischen den wenigstens zwei Elementen (5, 6, 7) wenigstens eine Schicht angeordnet ist, die nur Polymermaterial enthält; so daß während des Biegens eine interne Scherkraft zu einer winzigen elastischen Längsverformung innerhalb des Polymermaterials führt, die zu einer kleinen gegenseitigen Verschiebung zwischen benachbarten fiberverstärkten Schichten führt.

3. Flexibles Rohr nach Anspruch 1 oder 2,
**dadurch gekennzeichnet, daß** das innere Futterrohr (2) aus wenigstens einem Polymermaterial besteht, welches gegenüber Verschleiß, Abrieb, Chemikalien und Wärme ausreichenden Widerstand hat, um den Kohlenwasserstoffen ausgesetzt zu werden, die bei vorherrschendem Druck und Temperatur transportiert werden, und welches das Vermögen hat, mit der inneren, verstärkten Komponente (5) sicher verbunden zu werden.

4. Flexibles Rohr nach einem der Ansprüche 1 bis 3,
**dadurch gekennzeichnet, daß** das Außenrohr (4) wenigstens ein Polymermaterial enthält, welches so ausgebildet ist, daß es die benachbarten verstärkten Schichten gegenüber dem Ausgesetztsein von Verschleiß, Abrieb, Chemikalien und Wärme schützt; das vorzugsweise aus Polyäthylen, Polyamid besteht und im wesentlichen ein Material umfaßt, welches mit dem Matrixmaterial des äußersten Verstärkungselementes (6, 7) kompatibel ist.

5. Flexibles Rohr nach einem der Ansprüche 1 bis 4,
**dadurch gekennzeichnet, daß** wenigstens eines der mittleren Elemente (5, 6, 7) ein Matrixmaterial hat, das sich von einem Polymermaterial zu einem anderen Polymermaterial graduell oder schrittweise verändert.

6. Flexibles Rohr nach einem der Ansprüche 1 bis 5,
**dadurch gekennzeichnet, daß** die Verstärkungselemente (5, 6, 7) unterschiedliche Verstärkungsfibern haben, die jedesmal mit dem umgebenden Materixmaterial kompatibel sind.

7. Flexibles Rohr nach Anspruch 5 oder 6,
**dadurch gekennzeichnet, daß** das Materixmaterial in den verstärkten Komponenten (5, 6, 7) sich graduell oder in Schritten von PSU in der Nähe des inneren Futterrohres (2) zu PA oder PPA in der Nähe des Außenrohres (4) verändert.

8. Flexibles Rohr nach einem der Ansprüche 1 bis 7,
**dadurch gekennzeichnet, daß** das innere Futterrohr (2) aus einem ersten Basispolymer und das Außenrohr (4) aus dem ersten Basispolymer, vermischt mit einem oder mehreren anderen Polymeren, aufgebaut ist.

9. Flexibles Rohr nach einem der Ansprüche 1 bis 8,
wobei das Rohr (1) fortlaufend ohne irgendwelche Verbindungen ist und für einen hohen Innen- und Außendruck gestaltet ist,
**dadurch gekennzeichnet, daß**
- das innere Futterrohr (2) aus Polyetherketon (PEEK) besteht,
- das innere fiberverstärkte Element (5) einen Kohlenstoffiber-verstärkten Polysulfon-Verbundwerkstoff aufweist, mit:
- vielen Schichten unidirektionalem Band oder Garn, das auf das innere Futterrohr (2) aufgewickelt ist, wobei die Lage der aufgebrachten Fibern zwischen +60° und -60° abwechselt (typischerweise 14 abwechselnde Schichten),
- das äußere Verstärkungselement (6) glasfiberverstärktes Polyethersulfon (PES) aufweist, wobei die Glasfiberverstärkung abwechselnd mit +45° und -45° aufgewickelt ist, während
- das Außenrohr (4) aus einem Polyamid (PA) besteht.

## Revendications

1. Tube composite, polymère, flexible, tel qu'un riser flexible (1) adapté pour le transport de fluides, tels que des hydrocarbures, par exemple de pétrole et/ou de gaz, lequel riser flexible (1) comprend les éléments de structure suivants :
- un chemisage interne (2) d'un matériau thermoplastique,
- un constituant intermédiaire multicouche, polymère, renforcé (3), et
- un chemisage thermoplastique externe (4) ;
dans lequel le chamisage interne (2) est lié en continu au constituant intermédiaire multicouche (3), lequel est à nouveau lié en continu au chemisage externe (4),
de telle sorte que le constituant polymère renforcé (3) comprend au moins deux éléments distincts (5, 6, 7),
- un premier élément polymère renforcé (5) comprenant un polymère renforcé par des fibres, et
- un second élément polymère renforcé (6) comprenant également un élément renforcé par des fibres ;
**caractérisé en ce que**
- au moins un des paramètres suivants
- le matériau de fibres,
- le matériau de polymère,
- les détails de conception, tels que les dimensions et les longueurs de disposition pour les fibres, sont significativement différents pour lesdits au moins deux éléments (5, 6, 7),
- et **en ce que** toutes les couches sont liées à leur(s) couche(s) adjacente(s) au moyen du matériau de matrice dans la couche elle-même ;
pour assurer que le tube de riser (1) soit assez flexible pour être enroulé avec un rayon de courbure aussi court qu'approximativement 20 fois son diamètre externe.

2. Tube composite, polymère, flexible selon la revendication 1, **caractérisé en ce qu'**est(sont) disposée(s) au moins une couche contenant uniquement un matériau polymère de manière interne dans au moins un des éléments renforcés (5, 6, 7) et/ou entre lesdits au moins deux éléments (5, 6, 7) ; de telle sorte qu'une force de cisaillement interne pendant la flexion peut résulter en une déformation mineure élastique, longitudinale dans le matériau polymère menant à un faible déplacement mutuel entre des couches adjacentes renforcées par des fibres.

3. Tube flexible selon la revendication 1 ou 2, **caractérisé en ce que** le chemisage interne (2) est constitué d'au moins un matériau polymère étant suffisamment résistant à l'usure, à l'abrasion, aux produits chimiques et à la chaleur pour être exposé aux hydrocarbures qui doivent être transportés à la pression et à la température existantes et pouvant être lié de manière sûre au constituant interne renforcé (5).

4. Tube flexible selon l'une quelconque des revendications 1-3, **caractérisé en ce que** le liner externe (4) comprend au moins un matériau polymère adapté pour protéger les couches adjacentes renforcées de l'exposition à l'usure, à l'abrasion, aux produits chimiques et à la chaleur ; constitué de préférence de polyéthylène, de polyamide et comprenant pratiquement un matériau compatible avec le matériau de matrice de l'élément de renforcement se trouvant le plus à l'extérieur (6, 7).

5. Tube flexible selon l'une quelconque des revendications 1-4, **caractérisé en ce qu'**au moins un des éléments intermédiaires (5, 6, 7) présente un matériau de matrice changeant progressivement ou par étapes d'un matériau polymère à un autre matériau polymère.

6. Tube flexible selon l'une quelconque des revendications 1-5, **caractérisé en ce que** les éléments renforcés (5, 6, 7) présentent différentes fibres de renforcement, à chaque fois compatibles avec le matériau de matrice environnant.

7. Tube flexible selon la revendication 5 ou 6, **caractérisé en ce que** le matériau de matrice dans les constituants renforcés (5, 6, 7) change progressivement ou par étapes à partir du PSU proche du chemisage interne (2) à PA ou PPA proche du chemisage externe (4).

8. Tube flexible selon l'une quelconque des revendications 1-7, **caractérisé en ce que** le chemisage interne (2) est constitué d'un premier polymère basique et le chemisage externe (4) est constitué du premier polymère basique mélangé avec un ou plusieurs autres polymères.

9. Tube flexible selon l'une quelconque des revendications 1-8, dans lequel le tube (1) est continu sans aucun joint et est mis au point pour une pression interne et externe élevée, **caractérisé en ce que**
- le chemisage interne (2) est constitué de polyéther éther cétone (PEEK),
- l'élément renforcé par des fibres internes (5) comprend un composite de polysulfone renforcé par des fibres de carbone comprenant :
- plusieurs couches de bande ou de mèche unidirectionnelle enroulées sur le chemisage interne (2), dans lesquelles la disposition des fibres appliquées alterne entre +60° et -60° (typiquement 14 couches alternées),
- l'élément de renforcement externe (6) comprend de la polyéther sulfone (PES) renforcée par des fibres de verre, dans lequel le renforcement de fibres de verre est enroulé de manière alternée avec +45° et -45° alors que
- le chemisage externe (4) est constitué de polyamide (PA).
